# EUROPEAN PATENT APPLICATION

(11) **EP 4 851 684 A1**
(43) Date of publication of application: **09.12.2026**
(21) Application number: 25747846.1
(22) Date of filing: 24.01.2025
(51) Int. Cl.: G02B 6/12

(54) **OPTICAL WAVEGUIDE ARRAY MANUFACTURING METHOD AND ADHESIVE FILLING SYSTEM**

(30) Priority: 31.01.2024 CN 202410142052
(71) Applicant: Anhui Easpeed Technology Co., Ltd., Hefei, Anhui 230000 (CN)
(72) Inventor: ZHANG, Liangliang, Hefei, Anhui 230000 (CN); HAN, Dongcheng, Hefei, Anhui 230000 (CN)
(74) Representative: Barker Brettell LLP
(86) International application number: PCT/CN2025/074760
(87) International publication number: WO 2025/162278

(57) **Abstract**

Provided in the present application is an optical waveguide array manufacturing method, comprising: providing a plurality of waveguide mother pieces, each waveguide mother piece comprising a transparent substrate and a reflective film arranged on at least one surface of the transparent substrate; providing a separation layer on the reflective film of each waveguide mother piece; successively stacking the plurality of waveguide mother pieces to form a stack body, every two adjacent waveguide mother pieces being separated by the separation layers to form adhesive filling slits; respectively constructing communicating vessel structures at two opposite ends of the stack body, the two communicating vessels being communicated with each other by means of each adhesive filling slit; separately adding an adhesive into each communicating vessel until the adhesive fully fills each adhesive filling slit; curing the adhesive; and cutting the bonded stack body in a direction perpendicular to the transparent substrate to obtain a plurality of optical waveguide arrays. Further provided in the present disclosure is an adhesive filling system.

## Description

### CROSS-REFERENCE TO RELATED APPLICATION

The application claims the benefit and priority to Chinese Patent Application Serial No. 202410142052.6, filed on January 31, 2024, in China National Intellectual Property Administration, entitled "METHOD FOR MANUFACTURING AN OPTICAL WAVEGUIDE ARRAY AND ADHESIVE FILLING SYSTEM", and the content of which is hereby fully incorporated by reference.

### FIELD

The present disclosure relates to a method for manufacturing an optical waveguide array and an adhesive filling system used by the method.

### BACKGROUND

Current optical waveguide arrays are typically obtained by bonding multiple plate-shaped optical waveguide precursors to form a stack, and then cutting the stack to obtain the optical waveguide arrays. The multiple optical waveguide precursors are typically bonded together using a vacuum glue filling technique. However, the vacuum glue filling technique requires placing the stacked optical waveguide precursors in a vacuum chamber or performing sealing treatment, which increases the complexity of the process and poses high operational difficulty. Moreover, the cost of equipment for vacuum adhesive injection is high, reducing the economic applicability of the production process. In addition, the glass sealant used for sealing operations is prone to oil bleeding under heating conditions, which not only affects the optical performance of the optical waveguide but also impairs the curing effect of the adhesive. Results in numerous internal defects (such as bubbles, impurities, cracks, etc.) in the equivalent negative refractive flat lens, leading to bad imaging quality and adversely affecting user experience.

### SUMMARY

In a first aspect, the present disclosure provides a method for manufacturing an optical waveguide array including: providing a plurality of waveguide mother pieces, each of the plurality of waveguide mother pieces comprising a transparent substrate and a reflective film disposed on at least one surface of the transparent substrate; providing a separation layer on the reflective film of each of the plurality of waveguide mother pieces; stacking the plurality of waveguide mother pieces successively to form a stack body, wherein in the stack body, every two adjacent waveguide mother pieces are separated by the separation layer, thereby forming an adhesive filling slit between the two adjacent waveguide mother pieces; constructing two communicating vessel structures at two opposite ends of the stack body respectively, the two communicating vessels being communicated with each other via each of the adhesive filling slits; adding an adhesive into each of the communicating vessels until the adhesive completely fills each of the adhesive filling slits; curing the adhesive; and cutting the bonded stack body in a direction perpendicular to the transparent substrate to obtain a plurality of optical waveguide arrays.

The method for manufacturing the optical waveguide array provided by the present disclosure, by stacking a plurality of waveguide mother pieces into a stack body with an adhesive filling slit formed between every two adjacent waveguide mother pieces, and constructing communicating vessel structures at the two ends of the stack body so that the two communicating vessels are communicated with each other through each adhesive filling slit, facilitates adhesive filling of the stack body using the principle of communicating vessels, allowing the adhesive to flow into each adhesive filling slit, thereby achieving bonding of the multiple waveguide mother pieces. The manufacturing method has a simple process, conducive to cost reduction compared to vacuum adhesive filling. Since vacuum sealing is not required by the manufacturing method, the bonding process is not interfered with by any sealant, which is beneficial for improving the adhesion effect of the adhesive and ensuring the good imaging quality of the optical waveguide arrays.

In one embodiment, a thickness difference among the plurality of transparent substrates is less than 3 µm, and a flatness deviation is less than 2 µm.

In one embodiment, the step of providing the plurality of waveguide mother pieces comprises: coating the reflective film on one surface of each of the transparent substrates; or coating the reflective film on both surfaces of each of the transparent substrates.

In one embodiment, the step of providing a separation layer on the reflective film of each of the plurality of waveguide mother pieces specifically comprises: providing a plurality of spacers each in a columnar shape on the surface of the reflective film to form the separation layer, wherein each of the plurality of spacers has a height in a range from 1 µm to 100 µm, each of plurality of the spacers has a width in a range from 50 µm to 200 µm, and a distance between adjacent spacers is in a range from 100 µm to 5000 µm.

In one embodiment, the step of providing the separation layer on the reflective film of each of the plurality of waveguide mother pieces specifically comprises: providing a plurality of spacers on the surface of the reflective film by one manner of photolithographic exposure, screen printing, inkjet printing, nanoimprinting, UV-curable transfer, laser etching, and electrostatic spray curing.

In one embodiment, the step of stacking the plurality of waveguide mother pieces successively to form the stack body, wherein every two adjacent waveguide mother pieces are separated by the separation layer to form an adhesive filling slit, comprises: setting a levelness tolerance between each waveguide mother piece in the stack body to be less than or equal to 2 µm.

In one embodiment, the adhesive has a viscosity of less than 1000 Pa·s, and a curing temperature is 70°C to 200°C.

In one embodiment, the step of constructing the two communicating vessel structures at two opposite ends of the stack body respectively, the two communicating vessels being communicated with each other via each of the adhesive filling slits, specifically comprises: providing a communicating groove, the communicating groove comprising a bottom groove and two adhesive filling grooves, the two adhesive filling grooves being respectively communicated with one end of the bottom groove; providing a bottom baffle and two side baffles, covering the bottom baffle on the bottom groove, and movably arranging the two side baffles on opening sides of the adhesive filling grooves, so that the two adhesive filling grooves are communicated with each other through the bottom groove; placing the stack body on the bottom baffle, with two ends of each adhesive filling slit respectively aligned with the two side baffles.

In one embodiment, the step of adding the adhesive into each of the communicating vessels until the adhesive completely fills each of the adhesive filling slits specifically comprises: injecting the adhesive into the adhesive filling grooves until the communicating groove is filled with the adhesive; removing the two side baffles so that the adhesive in the adhesive filling grooves flows into each of the adhesive filling slits; continuing to inject the adhesive until the adhesive completely fills each of the adhesive filling slits.

In one embodiment, the step of constructing the two communicating vessel structures at two opposite ends of the stack body, the two communicating vessels being communicated with each other via each of the adhesive filling slits, specifically comprises: providing a carrying device, the carrying device comprising a bottom plate and side plates disposed at two ends of the bottom plate; placing the stack body on the bottom plate, wherein adhesive injection gaps are respectively formed between the stack body and the two side plates, and two opposite ends of each adhesive filling slit are respectively aligned with the two side plates; respectively providing sealing films on the waveguide mother pieces at the two ends of the stack body to seal the stack body with the carrying device.

In one embodiment, the step of adding the adhesive into each of the communicating vessels until the adhesive completely fills each of the adhesive filling slits specifically comprises: injecting the adhesive into the two adhesive injection gaps respectively.

In one embodiment, a width of the adhesive injection gap is in a range from 1 cm to 5 cm.

In a second aspect, the present disclosure provides an adhesive filling system, comprising: a communicating groove, the communicating groove comprising a bottom groove and two adhesive filling grooves, the two adhesive filling grooves being respectively communicated with one end of the bottom groove; a bottom baffle disposed on the bottom groove; two side baffles movably disposed on opening sides of the adhesive filling grooves respectively; and a stack body disposed on the bottom baffle, the stack body comprising a plurality of waveguide mother pieces arranged in a stack, wherein an adhesive filling slit is formed between every two adjacent waveguide mother pieces, and two ends of the adhesive filling slit respectively correspond to one of the side baffles.

In a third aspect, the present disclosure provides an adhesive filling system comprising: a carrying device comprising a bottom plate and side plates disposed at two ends of the bottom plate; a stack body disposed on the bottom plate, the stack body comprising a plurality of waveguide mother pieces arranged in a stack, wherein an adhesive filling slit is formed between every two adjacent waveguide mother pieces, and two ends of the adhesive filling slit respectively correspond to one of the side plates; and a plurality of sealing films respectively disposed between the two waveguide mother pieces at the two ends of the stack body and the carrying device.

### BRIEF DESCRIPTION OF THE DRAWINGS

In order to more clearly illustrate the technical solutions in the embodiments of the present disclosure, the accompanying drawings required for describing the embodiments are briefly introduced below. It is apparent that the accompanying drawings described below are merely some embodiments of the present disclosure, and those of ordinary skill in the art may also obtain other drawings based on these accompanying drawings without inventive effort.
FIG. 1 is a flowchart of an optical waveguide array manufacturing method according to an embodiment of the present disclosure.
FIG. 2 is a flowchart of steps S1 to S3 in FIG. 1.
FIG. 3 is a partially enlarged schematic structural view of the separation layer in FIG. 2.
FIG. 4 is an exploded view a communicating groove according to an embodiment of the present disclosure.
FIG. 5 is a perspective view of an adhesive filling system according to an embodiment of the present disclosure.
FIG. 6 is a schematic structural view of an adhesive filling system according to another embodiment of the present disclosure.
FIG. 7 is a flowchart in structure of step S7 in FIG. 1.

Description of Main Reference Numerals:

| | |
|---|---|
| Steps | S1 , S2 , S3 , S4 , S5 , S6 ,S7 |
| Stack body | 100 |
| Waveguide mother piece | 10 |
| Transparent substrate | 11 |
| Reflective film | 13 |
| Separation layer | 50 |
| Spacer | 51 |
| Adhesive filling slit | 60 |
| Adhesive filling systems | 200 , 300 |
| Communicating groove | 210 |
| Bottom groove | 211 |
| Adhesive filling groove | 213 |
| Bottom baffle | 215 |
| Side baffle | 217 |
| Carrying device | 310 |
| Bottom plate | 311 |
| Side plate | 313 |
| Adhesive injection gap | 314 |
| Sealing film | 315 |
| Adhesive | 80 |
| Syringe | 90 |
| Optical waveguide array | 400 |
| Height | a |
| Width | b |
| Spacing | c , d |

The following detailed description will further illustrate the present disclosure with reference to the above-mentioned drawings.

### DETAILED DESCRIPTION

The technical solutions of the embodiments of the present disclosure will be clearly and completely described below with reference to the accompanying drawings of the embodiments of the present disclosure. Obviously, the described embodiments are part of the embodiments of the present disclosure, rather than all of the embodiments.

Unless otherwise defined, all technical and scientific terms used in the present disclosure have the same meanings as commonly understood by those skilled in the technical field to which the present disclosure pertains. The terms used in the specification of the present disclosure are only for the purpose of describing specific embodiments, and are not intended to limit the present disclosure.

To further elaborate the technical means and effects adopted by the present disclosure to achieve the intended purpose, the present disclosure is described in detail below in connection with the accompanying drawings and preferred embodiments.

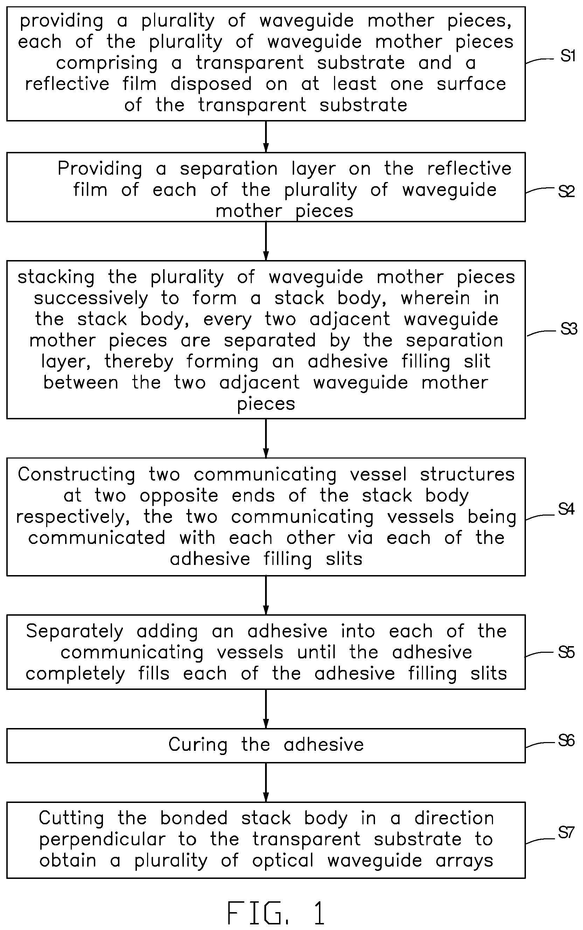

Referring to FIG. 1, an embodiment of the present disclosure provides a method for manufacturing an optical waveguide array. The method for manufacturing an optical waveguide array provided in an embodiment of the present disclosure includes:
Step S1: providing a plurality of waveguide mother pieces, each of the plurality of waveguide mother pieces comprising a transparent substrate and a reflective film disposed on at least one surface of the transparent substrate.
Step S2: providing a separation layer on the reflective film of each of the plurality of waveguide mother pieces.
Step S3: stacking the plurality of waveguide mother pieces successively to form a stack body, wherein in the stack body, every two adjacent waveguide mother pieces are separated by the separation layer, thereby forming an adhesive filling slit between the two adjacent waveguide mother pieces.
Step S4: constructing two communicating vessel structures at two opposite ends of the stack body respectively, the two communicating vessels being communicated with each other via each of the adhesive filling slits.
Step S5: adding an adhesive into each of the communicating vessels until the adhesive completely fills each of the adhesive filling slits.
Step S6: curing the adhesive.
Step S7: cutting the bonded stack body in a direction perpendicular to the transparent substrate to obtain a plurality of optical waveguide arrays.

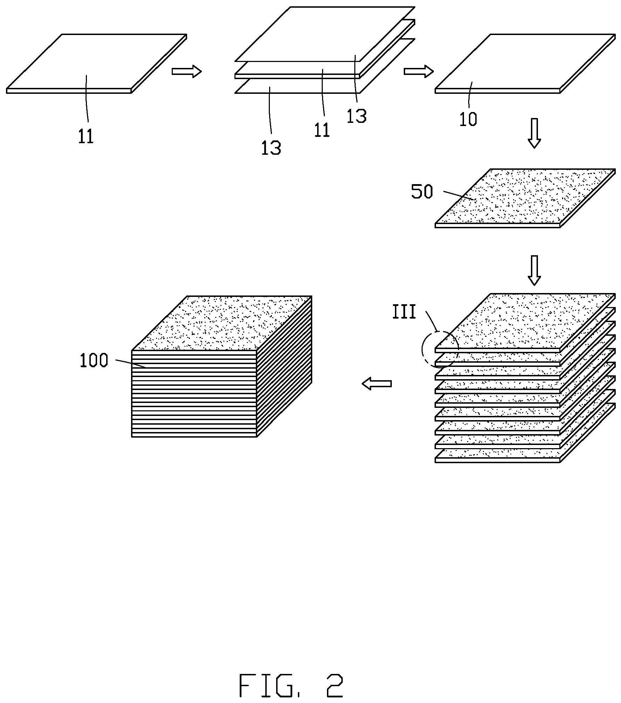

In detail, referring to FIG. 2, in Step S1, the transparent substrate 11 is a transparent plate, such as glass, resin, plastic (e.g., polycarbonate or acrylic), or other transparent materials. The thickness of the transparent substrate 11 may be in a range from 0.1 mm to 5 mm. Specifically, the optical waveguide array includes a plurality of optical waveguides arranged in parallel and reflective layers disposed between adjacent optical waveguides. The reflective layers are coated on the surfaces of the optical waveguides for reflecting light in the same direction. The optical waveguides are cut from the waveguide mother pieces 10. Therefore, by controlling the thickness difference and flatness deviation among the plurality of transparent substrates 11, the thickness difference and flatness deviation among the plurality of waveguide mother pieces 10 can be controlled, which is beneficial for ensuring dimensional consistency among the plurality of optical waveguides, thereby ensuring that the multiple reflective surfaces are parallel and equally spaced, and thus ensuring the imaging effect of the optical waveguides. The thickness difference among the plurality of transparent substrates 11 is less than 3 µm, and the flatness deviation is less than 2 µm.

In this embodiment, Step S1 specifically includes: coating the reflective film 13 on both sides of each transparent substrate 11. In other embodiments, Step S1 may also include coating the reflective film 13 on only one side of each transparent substrate 11, which is not limited to the present disclosure.

The thickness of the reflective film 13 is in a range from 1 µm to 300 µm. The reflective film 13 may specifically be a metal reflective film such as an aluminum metal reflective film, silver metal reflective film, copper metal reflective film, gold metal reflective film, chromium metal reflective film, platinum metal reflective film, or a total dielectric reflective film such as silicon monoxide reflective film, magnesium fluoride reflective film, silicon dioxide reflective film, aluminum oxide reflective film, or a metal-dielectric reflective film combining one or more of the above. The reflective film 13 may be coated on the transparent substrate 11 by one or more of vacuum evaporation, magnetron sputtering, ion plating, chemical vapor deposition, sol-gel method, photolithography, and other processes, which is not limited to the present disclosure.

In other embodiments, after coating the reflective film 13 on the transparent substrate 11, an inorganic material protective film layer or a polymer material anti-reflective film layer may also be coated on the surface of the reflective film 13, so as to protect the reflective film 13 or enhance transmission.

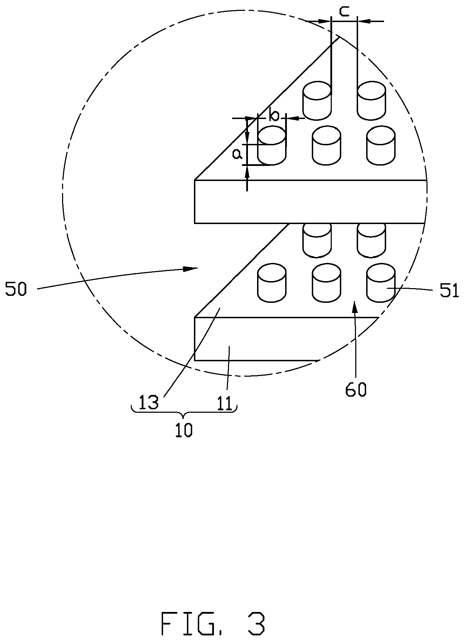

Referring to FIG. 2 and FIG. 3, Step S2 includes providing a plurality of columnar spacers 51 spaced apart from each other on the surface of the reflective film 13 to form a separation layer 50. Each spacer 51 has a height a in a range from 1 µm to 100 µm, a width b in a range from of 50 µm to 200 µm, and a distance c between adjacent spacers 51 in a range from 100 µm to 5000 µm. Specifically, the separation layer 50 includes a plurality of spacers 51 arranged at intervals, and the spacers 51 are columnar structures for abutting against two waveguide mother pieces 10 when stacked, so that the two waveguide mother pieces 10 do not completely adhere to each other. Adhesive filling slits 60 are formed between the plurality of spacers 51. After the two waveguide mother pieces 10 are separated by the plurality of spacers 51, the adhesive can flow between the two waveguide mother pieces 10 through the adhesive filling slits 60, thereby bonding the two waveguide mother pieces 10 together. When the viscosity of the adhesive is relatively high, the height a of the spacers 51 may be set larger, which facilitates the adhesive flowing into the adhesive filling slits 60. When the viscosity of the adhesive is relatively low, the height a of the spacers 51 may be set smaller, so that the waveguide mother pieces 10 are stacked compactly.

The spacers 51 may be disposed on the reflective film 13 by one of photolithographic exposure, screen printing, inkjet printing, nanoimprinting, UV-curable transfer, laser etching, and electrostatic spray curing. Depending on the different processes, the spacers 51 may also be made of different materials, which is not limited in the present disclosure.

In some embodiments, when the spacers 51 are formed by photolithographic exposure, screen printing, inkjet printing, nanoimprinting, UV-curable transfer, or laser etching, the spacing between the plurality of spacers 51 may be uniform. If the spacing c between spacers 51 is too large, the waveguide mother pieces 10 are prone to deformation, which in turn causes deformation of the manufactured optical waveguides and affects the imaging effect of the optical waveguide array. If the spacing between spacers 51 is too small, the overall volume of the adhesive filling slits 60 becomes smaller, resulting in a smaller amount of adhesive filled between the two waveguide mother pieces 10, thereby reducing bonding strength.

In some embodiments, when the electrostatic spray curing process is used to provide the spacers 51, spherical particles in a range from 1 µm to 20 µm may be selected, sprayed onto the reflective film 13 by electrostatic spraying, and then fixed on the surface of the reflective film 13 by heating and curing. During the electrostatic spraying process, the spacing between spacers can be controlled by controlling the density of sprayed spacers, thereby achieving an effect of approximately equal spacing of the spacers 51.

The color of the spacers 51 may be set to black or other dark colors to avoid affecting the imaging of the optical waveguide array. Specifically, the optical waveguide array is used to reflect light. When the spacers 51 are white or other colors, the color of the spacers 51 itself may be mixed into the light when light passes through the optical waveguide array, causing the color of the light to change and affecting the final imaging effect of the optical waveguide array.

Referring to FIG. 2, Step S3 includes setting the levelness tolerance between each waveguide mother piece 10 in the stack body 100 to be less than or equal to 2 µm. Specifically, since the optical waveguide array requires the plurality of optical waveguides to be arranged in parallel, it is necessary to ensure the levelness tolerance between the plurality of waveguide mother pieces 10 when stacking them.

In the process of forming the stack body 100, when only one side of each transparent substrate 11 is provided with the reflective film 13 and the separation layer 50, the plurality of waveguide mother pieces 10 need to be arranged in the same direction, so that the side of each waveguide mother piece 10 provided with the reflective film 13 is bonded to the side of another waveguide mother piece 10 not provided with the reflective film 13. When both sides of each transparent substrate 11 are provided with the reflective film 13, the arrangement direction of the plurality of waveguide mother pieces 10 is not limited.

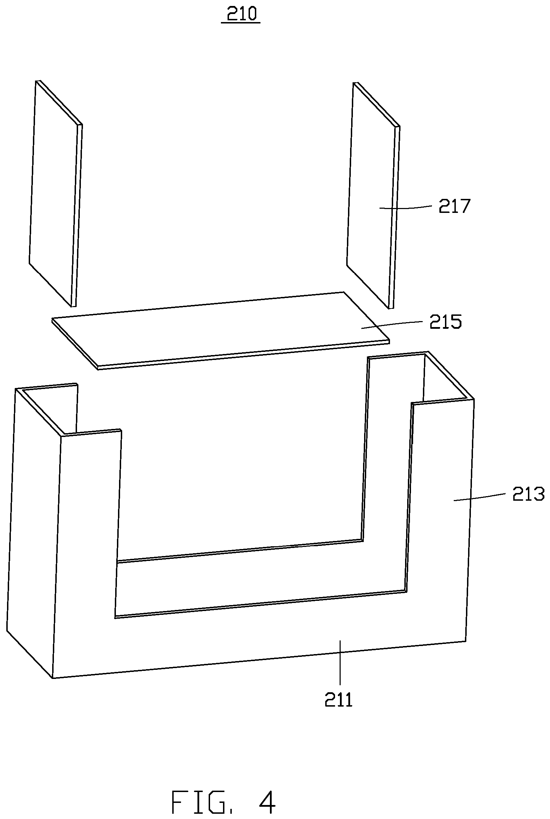

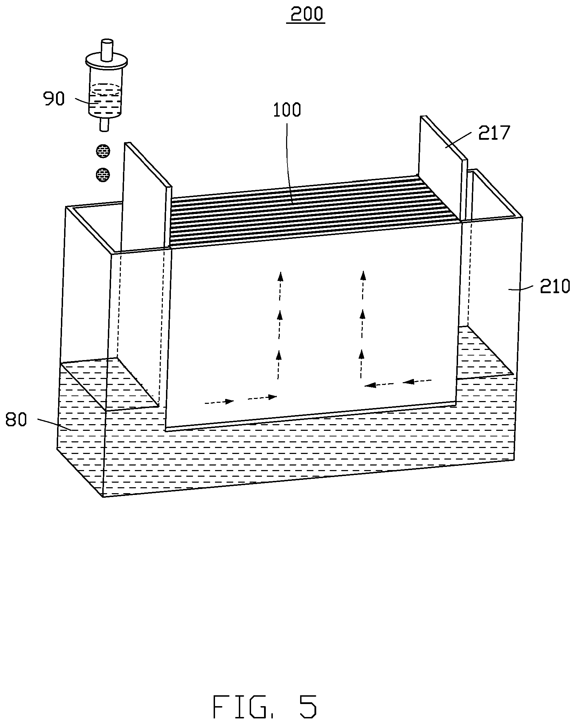

In this embodiment, referring to FIG. 4 and FIG. 5, Step S4 specifically includes:
Step S411: providing a communicating groove 210, the communicating groove 210 including a bottom groove 211 and two adhesive filling grooves 213, the two adhesive filling grooves 213 being respectively communicated with one end of the bottom groove 211.
Step S412: providing a bottom baffle 215 and two side baffles 217, covering the bottom baffle 215 on the bottom groove 211, and movably arranging the two side baffles 217 on the opening sides of the adhesive filling grooves 213, so that the two adhesive filling grooves 213 are communicated with each other through the bottom groove 211.
Step S413: placing the stack body 100 on the bottom baffle 215, with two ends of each adhesive filling slit 60 respectively aligned with the two side baffles 217.

Specifically, the communicating groove 210 is a U-shaped groove structure, including the bottom groove 211 disposed at the bottom and the adhesive filling grooves 213 disposed at the two ends. The opening of the bottom groove 211 faces toward the direction of the two adhesive filling grooves 213, and the openings of the two adhesive filling grooves 213 are arranged opposite to each other. The bottom baffle 215 is used to cover the opening of the bottom groove 211, and the side baffles 217 are used to movably cover the openings of the adhesive filling grooves 213. When both the bottom baffle 215 and the side baffles 217 are disposed on the communicating groove 210, the communicating groove 210 forms a communicating vessel structure, i.e., when liquid is injected into one adhesive filling groove 213, since the two adhesive filling grooves 213 are communicated through the bottom groove 211, the liquid flows into the other adhesive filling groove 213 under atmospheric pressure, and the liquid levels in the two adhesive filling grooves 213 are the same.

Step S413 specifically includes: placing the stack body 100 on the bottom baffle 215 so that three of four surfaces formed by peripheral edge of all of the plurality of waveguide mother pieces 10 stacked one on another face the bottom baffle 215 and the two side baffles 217 respectively. Thus, one side baffle 217 can be communicated with the other side baffle 217 through each adhesive filling slit 60.

Step S413 further includes: sealing the two waveguide mother pieces 10 at the two ends of the stack body 100 with the communicating groove 210 respectively, so that the stack body 100 and the communicating groove 210 together form a groove structure with an open top.

In this embodiment, Step S5 specifically includes: Step S511: injecting the adhesive into the adhesive filling grooves until the communicating groove is filled with the adhesive.

Step S512: removing the two side baffles so that the adhesive in the adhesive filling grooves flows into each of the adhesive filling slits.

Step S513: continuing to inject the adhesive until the adhesive completely fills each of the adhesive filling slits.

Specifically, in Step S511, injecting the adhesive 80 into the adhesive filling grooves 213 may be injecting the adhesive 80 into only one adhesive filling groove 213, or injecting the adhesive 80 into both adhesive filling grooves 213 simultaneously, which is not limited in this embodiment.

The adhesive 80 may be injected by a syringe 90, or may be poured directly. During the injection of the adhesive 80, it is necessary to maintain continuous and uniform speed to avoid entraining air.

In Step S512, after the side baffles 217 are removed, a communicating vessel structure is formed between the adhesive filling grooves 213 and the adhesive filling slits 60. Therefore, under atmospheric pressure, the adhesive 80 in the adhesive filling grooves 213 flows into the adhesive filling slits 60, thereby starting to fill the adhesive filling slits 60. Specifically, the flow direction of the adhesive 80 initially is from both sides of the adhesive filling slits 60 toward the middle. The adhesive 80 then starts to flow upward under atmospheric pressure until the liquid level of the adhesive 80 in the adhesive filling slits 60 is level with the liquid level in the adhesive filling grooves 213.

In Step S513, continuing to inject the adhesive 80 may be injecting the adhesive 80 into only one adhesive filling groove 213, or injecting the adhesive 80 into both adhesive filling grooves 213 simultaneously. Since the adhesive 80 is also communicated through the bottom groove 211, when the adhesive 80 is injected into only one adhesive filling groove 213, the adhesive 80 can flow through the bottom groove 211 into the other adhesive filling groove 213 under atmospheric pressure, thereby ensuring that the adhesive filling slits 60 can still be simultaneously filled with the adhesive 80 from both adhesive filling grooves 213, thus keeping the adhesive liquid level in the adhesive filling slits 60 level and improving the stability of adhesive filling.

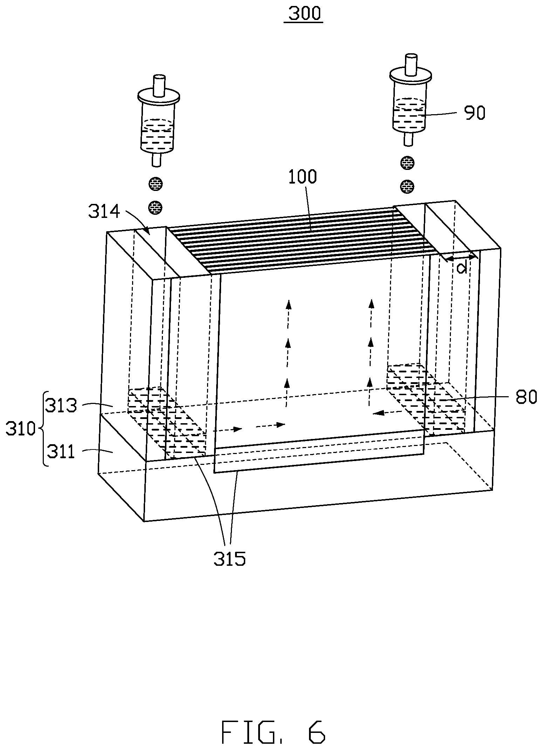

In another embodiment, referring to FIG. 6, Step S4 specifically includes:
Step S421: providing a carrying device, the carrying device including a bottom plate and side plates disposed at two ends of the bottom plate.
Step S422: placing the stack body on the bottom plate, wherein adhesive injection gaps are formed between the stack body and the two side plates respectively, and two opposite ends of each adhesive filling slit are respectively aligned with the two side plates.
Step S423: respectively providing sealing films on the waveguide mother pieces at the two ends of the stack body to seal the stack body with the carrying device.

Specifically, the carrying device 310 includes a bottom plate 311 and side plates 313 perpendicular to the bottom plate 311 and respectively disposed at two ends of the bottom plate 311. The bottom plate 311 and the side plates 313 together form a U-shaped structure. The stack body 100 is disposed on the bottom plate 311, and adhesive injection gaps 314 are formed between the stack body 100 and the two side plates 313. Three of the four surfaces formed by overlapping the plurality of waveguide mother pieces 10 respectively correspond to the bottom plate 311 and the two side plates 313. One adhesive injection gap 314 can be communicated with the other adhesive injection gap 314 through each adhesive filling slit 60.

In Step S423, the sealing films 315 are specifically used to connect and seal the stack body 100 with the bottom plate 311 and the two side plates 313, so that the two adhesive injection gaps 314 form two communicating vessel structures.

The width of the adhesive injection gaps 314 may be set to in a range from 1 cm to 5 cm, depending on the actual disclosure and the adhesive injection method. The smaller the width of the adhesive injection gaps 314, the higher the precision required for adhesive injection, but the amount of adhesive 80 ultimately used is less.

The sealing films 315 are heat-resistant films, so as to avoid damage when the adhesive 80 releases heat. The sealing films 315 may also be made of transparent material to facilitate observation of the liquid level in the adhesive injection gaps 314.

In this embodiment, Step S5 specifically includes: injecting the adhesive 80 into the two adhesive injection gaps 314 respectively until the adhesive filling slits 60 are completely filled with the adhesive 80. Specifically, by injecting the adhesive 80 into the two adhesive injection gaps 314, under atmospheric pressure, the adhesive 80 flows toward the middle adhesive filling slits 60, thereby filling into the adhesive filling slits 60. Finally, when the adhesive 80 fills the two adhesive injection gaps 314, all the adhesive filling slits 60 are also completely filled with the adhesive 80.

Step S6 specifically includes: placing the communicating vessel structure together in an oven for curing, so as to obtain a fully bonded stack body 100. Specifically, after all the adhesive filling slits 60 of the stack body 100 are filled with the adhesive 80, the entire adhesive filling system may be heated to cure the adhesive 80, thereby preventing the adhesive 80 in the adhesive filling slits 60 from flowing out when the stack body 100 is taken out, which would affect the bonding effect.

Step S6 further includes: after curing for more than 24 hours, performing two or more annealing treatments on the stack body 100 to eliminate curing stress.

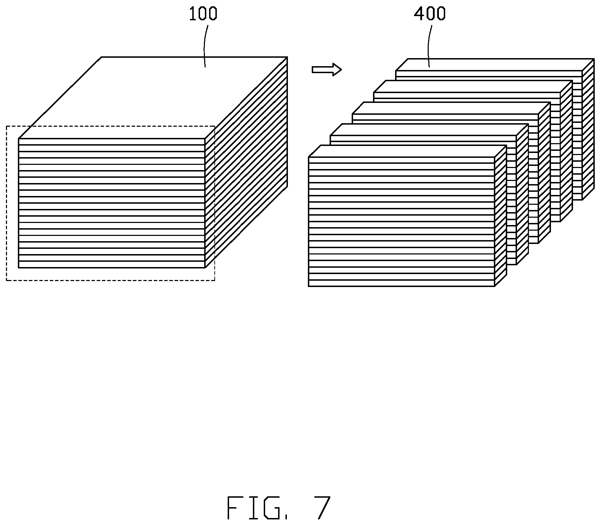

Referring to FIG. 7, Step S7 specifically includes: cutting the stack body 100, and performing grinding, polishing, and other processes to obtain a plurality of optical waveguide arrays 400. Specifically, first, the stack body 100 is cut out from the communicating vessel structure, and then the stack body 100 is cut in a direction perpendicular to the transparent substrate 11, thereby obtaining a plurality of optical waveguide arrays 400. Then, the optical waveguide arrays 400 are processed by grinding, polishing, and other processes to eliminate surface wear caused by the previous processes.

The adhesive 80 is a two-component thermosetting adhesive. The two components are stored when not in use and mixed together when used, thereby becoming a viscous adhesive 80. The viscosity of the adhesive 80 is less than or equal to 1000 Pa·s. The working time of the mixed adhesive 80 is greater than 1 hour, and the curing temperature of the adhesive 80 is 70°C to 200°C. In other embodiments, the adhesive 80 may also be a single-component adhesive as needed, which is not limited in the present disclosure.

In the method for manufacturing an optical waveguide array provided in the embodiments of the present disclosure, by placing the stack body 100 formed by stacking a plurality of waveguide mother pieces 10 into a communicating vessel, and making the adhesive filling slits 60 between adjacent waveguide mother pieces 10 communicate with the communicating vessel structure, it is possible to inject the adhesive into the communicating vessel structure to fill the adhesive filling slits 60, thereby bonding the plurality of waveguide mother pieces 10. This manufacturing method has a simple process and can ensure imaging quality, which is beneficial for reducing production costs.

An embodiment of the present disclosure also provides an adhesive filling system 200. Referring to FIG. 4 and FIG. 5, the adhesive filling system 200 includes a communicating groove 210, a bottom baffle 215, two side baffles 217, and a stack body 100. The communicating groove 210 is a U-shaped groove structure, including a bottom groove 211 at the bottom and adhesive filling grooves 213 at the two ends. The opening of the bottom groove 211 faces toward the direction of the two adhesive filling grooves (213) 213, and the openings of the two adhesive filling grooves 213 are arranged opposite to each other, so that the two adhesive filling grooves 213 are communicated through the bottom groove 211. The bottom baffle 215 is used to cover the opening of the bottom groove 211, and the side baffles 217 are used to movably cover the openings of the adhesive filling grooves 213. The stack body 100 is disposed on the bottom baffle 215, and the stack body 100 includes a plurality of waveguide mother pieces 10 arranged in a stack. An adhesive filling slit 60 is formed between every two adjacent waveguide mother pieces 10, and two ends of the adhesive filling slit 60 respectively correspond to one of the side baffles 217.

In the adhesive filling system 200 provided in the embodiments of the present disclosure, by providing the communicating groove 210 in combination with the bottom baffle 215 and the two side baffles 217, a communicating vessel structure can be formed between the two adhesive filling grooves 213. By disposing the stack body 100 on the bottom baffle 215 and making the two side baffles 217 movable, after the side baffles 217 are removed from the openings of the adhesive filling grooves 213, the adhesive filling slits 60 are communicated with the two adhesive filling grooves 213, thereby facilitating the adhesive 80 to flow into the adhesive filling slits 60 through the adhesive filling grooves 213, thus achieving bonding of the plurality of waveguide mother pieces 10.

An embodiment of the present disclosure also provides an adhesive filling system 300. Referring to FIG. 6, the adhesive filling system 300 includes a carrying device 310, a stack body 100, and a plurality of sealing films 315. The carrying device 310 includes a bottom plate 311 and side plates 313 perpendicular to the bottom plate 311 and respectively disposed at two ends of the bottom plate 311. The bottom plate 311 and the side plates 313 form a U-shaped structure. The stack body 100 is disposed on the bottom plate 311, and adhesive injection gaps 314 are formed between the stack body 100 and the two side plates 313. The plurality of waveguide mother pieces 10 are overlapped to form four surfaces, and three of the four surfaces respectively correspond to the bottom plate 311 and the two side plates 313. Thus, one adhesive injection gap 314 can be communicated with the other adhesive injection gap 314 through each adhesive filling slit 60. The sealing films 315 are specifically used to connect and seal the stack body 100 with the bottom plate 311 and the two side plates 313, so that the two adhesive injection gaps 314 form communicating vessel structures.

In the adhesive filling system 300 provided in the embodiments of the present disclosure, by providing the bottom plate 311, the side plates 313, the stack body 100, and the sealing films 315, the adhesive filling slits 60 and the two adhesive injection gaps 314 can form a communicating vessel structure. When injecting the adhesive 80 into the two adhesive injection gaps 314, under atmospheric pressure, the adhesive 80 can flow into the adhesive filling slits 60, thereby achieving bonding of the plurality of waveguide mother pieces 10.

It should be noted that the above examples are only used to illustrate the technical solutions of the present disclosure rather than to limit them. Although the present disclosure has been described in detail with reference to the preferred embodiments, it should be understood by those skilled in the art that the technical solutions of the present disclosure can be modified or equivalently substituted without departing from the spirit and scope of the present disclosure.

## Claims

1. A method for manufacturing an optical waveguide array, **characterized by** comprising:
providing a plurality of waveguide mother pieces, each of the plurality of waveguide mother pieces comprising a transparent substrate and a reflective film disposed on at least one surface of the transparent substrate;
providing a separation layer on the reflective film of each of the plurality of waveguide mother pieces;
stacking the plurality of waveguide mother pieces sequentially to form a stack body, wherein in the stack body, every two adjacent waveguide mother pieces are separated by the separation layer, thereby forming an adhesive filling slit between the two adjacent waveguide mother pieces;
constructing two communicating vessel structures at two opposite ends of the stack body respectively, the two communicating vessels being communicated with each other via each of the adhesive filling slits;
adding an adhesive into each of the communicating vessels until the adhesive completely fills each of the adhesive filling slits;
curing the adhesive; and
cutting the bonded stack body along a direction perpendicular to the transparent substrate to obtain a plurality of optical waveguide arrays.

2. The method for manufacturing an optical waveguide array of claim 1, wherein a thickness difference among the plurality of transparent substrates is less than 3 µm, and a flatness deviation is less than 2 µm.

3. The method for manufacturing an optical waveguide array of claim 1, wherein the step of providing the plurality of waveguide mother pieces comprises: coating the reflective film on one surface of each of the transparent substrates; or coating the reflective film on both surfaces of each of the transparent substrates.

4. The method for manufacturing an optical waveguide array of claim 1, wherein the step of providing a separation layer on the reflective film of each of the plurality of waveguide mother pieces specifically comprises: providing a plurality of spacers each in a columnar shape on the surface of the reflective film to form the separation layer, wherein each of the plurality of spacers has a height in a range from 1 µm to 100 µm, each of the plurality of spacers has a width in a range from 50 µm to 200 µm, and a distance between adjacent spacers is in a range from 100 µm to 5000 µm.

5. The method for manufacturing an optical waveguide array of claim 1, wherein the step of providing the separation layer on the reflective film of each of the plurality of waveguide mother pieces specifically comprises: providing a plurality of spacers on the surface of the reflective film by one manner of photolithographic exposure, screen printing, inkjet printing, nanoimprinting, UV-curable transfer, laser etching, and electrostatic spray curing.

6. The method for manufacturing an optical waveguide array of claim 1, wherein the step of stacking the plurality of waveguide mother pieces successively to form the stack body, wherein every two adjacent waveguide mother pieces are separated by the separation layer to form an adhesive filling slit, comprises: setting a levelness tolerance between each waveguide mother piece in the stack body to be less than or equal to 2 µm.

7. The method for manufacturing an optical waveguide array of claim 1, wherein the adhesive has a viscosity of less than 1000 Pa·s, and a curing temperature is 70°C to 200°C.

8. The method for manufacturing an optical waveguide array of claim 1, wherein the step of constructing the two communicating vessel structures at two opposite ends of the stack body respectively, the two communicating vessels being communicated with each other via each of the adhesive filling slits, specifically comprises:
providing a communicating groove, the communicating groove comprising a bottom groove and two adhesive filling grooves, the two adhesive filling grooves communicated with one end of the bottom groove respectively;
providing a bottom baffle and two side baffles, covering the bottom baffle on the bottom groove, and movably arranging the two side baffles on opening sides of the adhesive filling grooves, so that the two adhesive filling grooves are communicated with each other through the bottom groove;
placing the stack body on the bottom baffle, with two ends of each adhesive filling slit aligned with the two side baffles respectively.

9. The method for manufacturing an optical waveguide array of claim 8, wherein the step of adding the adhesive into each of the communicating vessels until the adhesive completely fills each of the adhesive filling slits specifically comprises:
injecting the adhesive into the adhesive filling grooves until the communicating groove is filled with the adhesive;
removing the two side baffles so that the adhesive in the adhesive filling grooves flows into each of the adhesive filling slits;
continuing to inject the adhesive until the adhesive completely fills each of the adhesive filling slits.

10. The method for manufacturing an optical waveguide array of claim 1, wherein the step of constructing the two communicating vessel structures at two opposite ends of the stack body respectively, the two communicating vessels being communicated with each other via each of the adhesive filling slits, specifically comprises:
providing a carrying device, the carrying device comprising a bottom plate and side plates disposed at two ends of the bottom plate;
placing the stack body on the bottom plate, wherein adhesive injection gaps are respectively formed between the stack body and the two side plates, and two opposite ends of each adhesive filling slit are aligned with the two side plates respectively;
respectively providing sealing films on the waveguide mother pieces at the two ends of the stack body to seal the stack body with the carrying device.

11. The method for manufacturing an optical waveguide array of claim 10, wherein the step of adding the adhesive into each of the communicating vessels until the adhesive completely fills each of the adhesive filling slits specifically comprises: injecting the adhesive into the two adhesive injection gaps respectively.

12. The method for manufacturing an optical waveguide array of claim 10, wherein a width of the adhesive injection gap is in a range from 1 cm to 5 cm.

13. An adhesive filling system, **characterized by** comprising:
a communicating groove, the communicating groove comprising a bottom groove and two adhesive filling grooves, the two adhesive filling grooves being respectively communicated with one end of the bottom groove;
a bottom baffle disposed on the bottom groove;
two side baffles movably disposed on opening sides of the adhesive filling grooves respectively; and
a stack body disposed on the bottom baffle, the stack body comprising a plurality of waveguide mother pieces arranged in a stack, wherein an adhesive filling slit is formed between every two adjacent waveguide mother pieces, and two ends of the adhesive filling slit respectively correspond to one of the side baffles.

14. An adhesive filling system, **characterized by** comprising:
a carrying device comprising a bottom plate and side plates disposed at two ends of the bottom plate;
a stack body disposed on the bottom plate, the stack body comprising a plurality of waveguide mother pieces arranged in a stack, wherein an adhesive filling slit is formed between every two adjacent waveguide mother pieces, and two ends of the adhesive filling slit respectively correspond to one of the side plates; and
a plurality of sealing films respectively disposed between the two waveguide mother pieces at the two ends of the stack body and the carrying device.
